# FASCICULE DE BREVET EUROPEEN

(11) **EP 2 088 758 B1**
(45) Date de publication et mention de la délivrance du brevet: **27.04.2011**
(21) Numéro de dépôt: 09152424.9
(22) Date de dépôt: 10.02.2009
(51) Int. Cl.: H04M 3/56

(54) **Serveur proposant automatiquement un service de traduction aux usagers d'un réseau téléphonique**
Server zum automatischen Anbieten eines Übersetzungsdienstes an Teilnehmer eines Telefonnetzes
Server for automatically offering a translation service to the users of a telephone network

(30) Priorité: 11.02.2008 FR 0850828
(43) Date de publication de la demande: 12.08.2009
(73) Titulaire: Alcatel Lucent, 75008 Paris (FR)
(72) Inventeur: Pierre, Sylvie CO/Alcatel-Lucent Enterprise, 67400, ILLKIRCH (FR); Behr, Jean-Luc CO/Alcatel-Lucent Enterprise, 67400, ILLKIRCH (FR)
(74) Mandataire: Sciaux, Edmond

(56) Documents cités:
- EP-A- 1 081 926
- US-A1- 2006 165 225
- US-B1- 6 914 964

## Description

L'invention concerne un serveur proposant automatiquement un service de traduction à des usagers d'un réseau téléphonique. Lorsqu'un premier usager appelle un second usager qui ne parle pas la même langue, ni aucune autre langue connue du premier usager, ces deux usagers doivent utiliser une troisième personne, un traducteur humain, pour avoir une traduction simultanée. Ce problème se pose notamment lorsqu'un employé d'une société téléphone à un autre employé, de la même société ou d'une autre société, situé dans un autre pays. Si, au moment de l'établissement de la communication, ces deux personnes constatent qu'elles ne connaissent pas une langue commune, elles doivent interrompre la communication pour trouver un traducteur humain, ayant des capacités linguistiques adéquates, puis organiser une conférence téléphonique avec le traducteur humain pour avoir une traduction simultanée.

Le document US 6.690.932 décrit un centre d'appel dans lequel, si un opérateur humain constate qu'un usager appelant parle une langue qu'il ne connaît pas, l'opérateur commande un dispositif qui appelle automatiquement une agence de traduction en lui fournissant immédiatement des informations : L'identité du centre d'appel et la désignation de la langue à traduire, ou un indicateur signifiant que la langue à traduire n'a pas encore été identifiée. Un message préenregistré fait patienter l'usager appelant en attendant que l'agence de traduction réponde en proposant un traducteur. L'opérateur, le traducteur, et l'usager appelant sont ensuite mis en conférence téléphonique.

Un tel centre d'appel est bien adapté pour constituer un centre d'appel d'urgence, parce que la présence d'un opérateur humain est indispensable pour répondre à des demandes des secours, même en l'absence de problème de langue. Par contre, un tel centre d'appel n'est pas adapté aux besoins d'une entreprise qui souhaite seulement résoudre le problème de langue pouvant se poser lorsqu'un de ses employés doit téléphoner à l'étranger. La présence d'un opérateur humain dans un centre d'appel qui serait utilisé comme intermédiaire dans un tel cas serait une solution trop coûteuse pour une entreprise ou même pour un ensemble d'entreprises.

Le document US 6 914 964 décrit un serveur d'appels proposant automatiquement un service de traduction à des usagers d'un réseau téléphonique, comportant :
- des moyens pour lire dans une base de données une première indication de capacités linguistiques d'un premier usager, et une seconde indication de capacités linguistiques d'un second usager, lorsque l'établissement d'un appel entre ces deux usagers est demandé ;
- des moyens pour détecter une incompatibilité entre la première et la seconde indication de capacités linguistiques, et demander alors l'établissement d'une communication avec le terminal d'un traducteur correspondant à la première et à la seconde indication de capacités linguistiques.

L'inconvénient de ce serveur connu est de nécessiter la création préalable d'une base de données centralisant les indications de capacité linguistiques pour tous les usagers susceptibles d'avoir besoin du service de traduction.

Les documents US 2006/0165225 décrit un serveur d'appels qui demande à un usager appelant d'indiquer ses capacités linguistique, par un message vocal du type « Si vous parlez anglais, appuyer sur la touche N°1 ; si vous parlez espagnol, appuyer sur la touche n°2 ; etc. L'usager appelant donne chaque indication de capacités linguistique en pressant sur une touche du clavier de son terminal téléphonique. L'indication est transmise sous la forme d'un signal multifréquence. Ensuite le serveur demande à l'usager appelant d'indiquer les capacités linguistiques de l'usager appelé. Enfin, il appelle un traducteur correspondant aux indications de capacités linguistiques de l'appelant et de l'appelé.

L'inconvénient de ce serveur connu est de demander à un usager d'indiquer lui-même ses capacités linguistiques en pressant des touches. Cela ralentit beaucoup le processus de mise en communication de l'appelant et de l'appelé, avec un traducteur.

Le but de l'invention est de fournir une solution plus rapide pour proposer un service de traduction à des usagers d'un réseau téléphonique.

Un premier objet de l'invention est un serveur d'appels proposant automatiquement un service de traduction à des usagers d'un réseau téléphonique, comportant :
- des moyens pour recevoir une première indication de capacités linguistiques concernant un premier usager, et une seconde indication de capacités linguistiques concernant un second usager, lorsque l'établissement d'un appel entre ces deux usagers est demandé ;
- des moyens pour détecter une incompatibilité entre la première et la seconde indication de capacités linguistiques, et demander alors à un second serveur d'appel l'établissement d'une communication avec le terminal d'un traducteur correspondant à la première et à la seconde indication de capacités linguistiques, et qui soit disponible à l'instant considéré ;
- des moyens pour recevoir une réponse du second serveur d'appels;
- et des moyens pour établir une conférence téléphonique réunissant les terminaux des deux usagers et celui d'un traducteur, via le second serveur d'appels, si le second serveur d'appel a répondu qu'il a trouvé un traducteur correspondant à la première et à la seconde indication de capacités linguistiques, et qui est disponible à l'instant considéré ;
   caractérisé en ce que lesdits moyens pour recevoir une première indication des capacités linguistiques d'un premier usager, et une seconde indication des capacités linguistiques d'un second usager, lorsque l'établissement d'un appel entre ces deux usagers est demandé, comportent :
- des moyens pour extraire, d'un premier message de signalisation SIP (Session Initiation Protocol) reçu en provenance d'un terminal du premier usager, une indication des capacités linguistiques de ce premier usager,
- des moyens pour inviter le terminal du second usager à lui envoyer un second message de signalisation SIP comportant une indication des capacités linguistiques de ce second usager,
- des moyens pour recevoir en provenance du terminal du second usager, ce second message de signalisation,
- des moyens pour extraire, de ce second message de signalisation, l'indication des capacités linguistiques de ce second usager ;
- des moyens pour envoyer alors au second serveur d'appel un troisième message de signalisation SIP contenant une première et une seconde indication de capacités linguistiques, et demandant l'établissement d'une communication avec le terminal d'un traducteur correspondant à la première et à la seconde indication de capacités linguistiques.

Le serveur ainsi caractérisé évite de faire intervenir un usager pour obtenir une indication de capacités linguistique parce qu'il exploite le fait qu'un terminal téléphonique supportant le protocole de signalisation SIP est capable de fournir une telle indication sans intervention d'un usager, car cette indication a été mémorisée une fois pour toutes, dans le terminal, lors de l'installation de ce terminal.

Un second objet de l'invention est un système comprenant un tel serveur d'appels, et caractérisé en ce qu'il comprend également un second serveur d'appels comportant des moyens pour jouer le rôle d'un centre d'appel pour une pluralité de terminaux mis à la disposition d'une pluralité de traducteurs, caractérisé en ce qu'il comporte :
- des moyens pour recevoir, en provenance d'un autre serveur d'appels, un message SIP contenant une demande d'établissement d'une communication avec un terminal,
- des moyens pour extraire de ce message SIP une première et une seconde indication de capacités linguistiques,
- des moyens pour rechercher dans une base de données un traducteur correspondant à la première et à la seconde indication de capacités linguistiques, et qui soit disponible à l'instant considéré ; puis envoyer une réponse à l'autre serveur d'appels.

L'invention sera mieux comprise et d'autres caractéristiques apparaîtront à l'aide de la description ci-dessous et des figures l'accompagnant :
- La figure 1 représente un premier exemple de réseau dans lequel est implémenté un premier exemple de réalisation des deux serveurs d'appel selon l'invention.
- La figure 2 représente les messages de signalisation SIP (Session Initialization Protocol) échangés au cours d'une première phase de l'utilisation de ce premier exemple de réalisation.
- La figure 3 représente les messages de signalisation SIP échangés au cours d'une seconde phase de l'utilisation de ce premier exemple de réalisation.
- La figure 4 représente un second exemple de réseau dans lequel est implémenté un second exemple de réalisation des deux serveurs d'appel selon l'invention.
- La figure 5 représente les messages de signalisation SIP échangés au cours d'une première phase de l'utilisation du second exemple de réalisation.
- La figure 6 représente les messages de signalisation SIP échangés au cours d'une seconde phase de l'utilisation du second exemple de réalisation.
- La figure 7 représente les messages de signalisation SIP échangés au cours d'une troisième phase de l'utilisation du second exemple de réalisation.

Les serveurs d'appels selon l'invention sont utilisables dans tout réseau de télécommunication, à commutation de paquets, supportant le protocole Internet et le protocole de signalisation SIP.

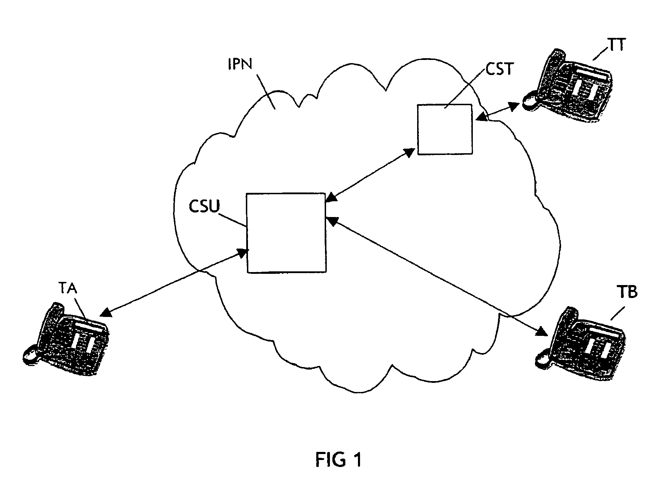

La **figure 1** représente un premier exemple de réseau, référencé IPN, supportant le protocole internet et le protocole de signalisation SIP, et dans lequel est implémenté un premier exemple de réalisation des deux serveurs d'appel selon l'invention.

Ce réseau est un réseau public qui comporte :
- Un serveur d'appels, référencé CSU, qui est sur le chemin reliant les deux terminaux TA, TB, considérés à titre d'exemple. Il peut y avoir d'autres éléments sur ce chemin, notamment des serveurs mandataires, non représentés, ces éléments relayant les messages sans jouer de rôle particulier pour la fonctionnalité considérée ici. Un usager A utilise le terminal TA pour appeler un usager B utilisant le terminal TB. La langue maternelle de l'usager A est le Français, et la langue maternelle de l'usager B est l'Espagnol.
- Un autre serveur d'appels, référencé CST, auquel sont rattachés plusieurs terminaux mis à la disposition de traducteurs, notamment un terminal TT représenté à titre d'exemple. Le serveur d'appels CST comporte des moyens classiques lui permettant de jouer le rôle de centre d'appel pour un groupe de traducteurs constituant une agence de traduction. Ces moyens sont aptes à rechercher dans une base de données locale (non représentée) un traducteur qui a des capacités linguistiques données, et qui est disponible à l'instant considéré.

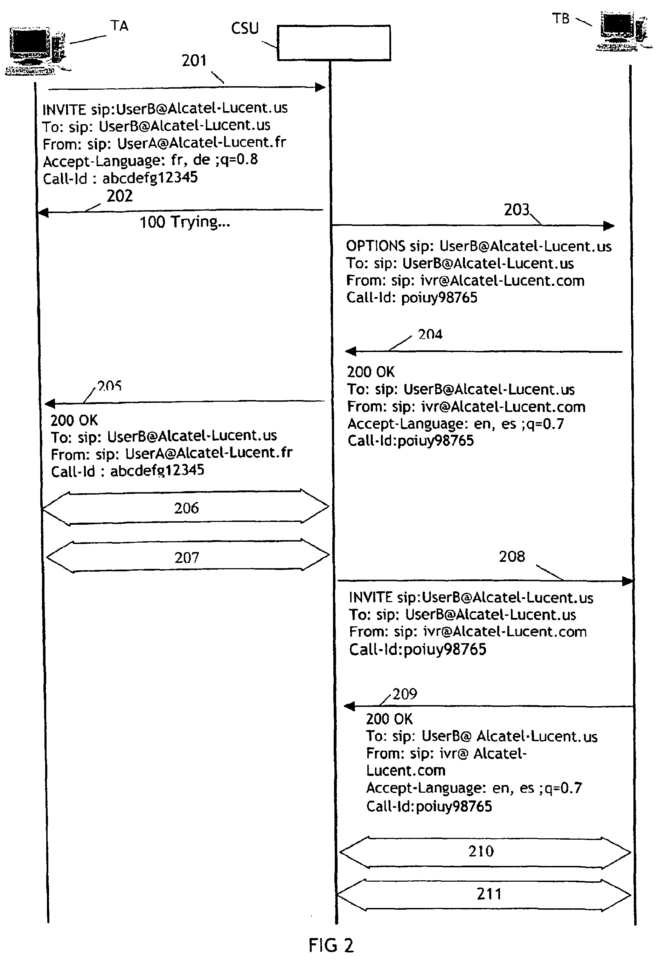

La **figure 2** représente les messages de signalisation échangés au cours d'une première phase de l'utilisation du premier exemple de réalisation sur la figure 1.

**Etape 201:** Le terminal TA de l'usager A demande l'établissement d'une communication avec le terminal TB de l'usager B. Ces deux terminaux sont compatibles avec le protocole de signalisation SIP. Le terminal TA envoie au serveur CSU, auquel il est rattaché, un message INVITE, prévu dans la norme SIP :
INVITE sip: UserB@Alcatel-Lucent.us
To: sip: UserB@Alcatel-Lucent.us
From: sip: UserA@Alcatel-Lucent.fr
Accept-Language: fr, de; q=0.8
Call-Id : abcdefg12345
...

Dans ce message, le champ « To : sip : UserB @Alcatel-Lucent.fr » indique l'adresse du terminal destinataire TB, et le champ « From : sip : UserA@Alcatel-Lucent.us » indique l'adresse du terminal expéditeur TA. Le champ «Call-Id : abcdefg 12345 » est un identificateur de communication.

Un champ Accept-Language est prévu dans les messages INVITE par la norme SIP pour indiquer les capacités linguistiques de l'usager d'un terminal, de manière à pouvoir afficher sur ce terminal des messages qui soient de préférence dans une langue compréhensible par cet usager. Dans cet exemple, le contenu «Accept-Language: fr, de ; q=0.8 » de ce champ signifie que l'usager du terminal A a pour langue maternelle le Français (en sous-entendant qu'il a des capacités linguistiques maximales dans sa langue maternelle), et que cet usager comprend en outre l'Allemand avec une capacité égale 0,8 sur une échelle de capacité prédéterminée s'étalant de 0 à 1, par pas de 0,1. Ces valeurs de capacité ont été écrites une fois pour toutes dans une mémoire du terminal TA, par son utilisateur A.

Le serveur CSU comporte des moyens logiciels pour extraire du message de signalisation INVITE reçu en provenance du terminal TA de l'usager A, le champ indiquant les capacités linguistiques de cet usager A.

**Etape 202 :** Le serveur d'appels CSU répond au terminal TA par le message SIP suivant : 100 Trying.... Ce message signifie que le serveur CSU essaie d'établir la communication demandée. Mais, avant de retransmettre le message INVITE au terminal TB, qui est rattaché aussi au serveur CSU, ce serveur va vérifier la compatibilité linguistique entre les usagers A et B.

**Etape 203 :** Le serveur d'appels CSU envoie un message OPTIONS au terminal TB :
OPTIONS sip: UserB@Alcatel-Lucent.us
To: sip: UserB@Alcatel-Lucent.us
From: sip: ivr@Alcatel-Lucent.com
Call-Id: poluy98765
...

Ce message OPTIONS, prévu par la norme SIP, invite le terminal TB à indiquer ses capacités, notamment les capacités linguistiques de l'utilisateur du terminal TB. Le champ « Call-id : poiuyy98765 » identifie la communication entre le serveur CSU et le terminal TB. Le serveur CSU comporte des moyens logiciels pour envoyer au terminal TB ce message OPTIONS invitant le terminal TB à lui envoyer un message comportant un champ indiquant les capacités linguistiques de l'usager B.

**Etape 204 :** Le terminal TB répond au serveur d'appels CSU par le message suivant :
200 OK
To: sip: UserB@Alcatel-Lucent.us
From: sip: ivr@Alcatel-Lucent.com
Accept-Language: en, es; q=0.7
Call-Id: poluy98765
...

Ce message 200 OK indique que le terminal TB est prêt pour établir une communication. Dans ce message, le champ «Accept-Language: en, es; q=0.7 » est une indication de capacités linguistiques qui signifie que l'usager B a l'Anglais pour langue maternelle, mais parte aussi l'Espagnol avec une capacité égale à 0,7 sur l'échelle de capacités prédéterminées s'étalant de 0 à 1. Ces valeurs de capacité ont été écrites une fois pour toutes dans une mémoire du terminal TB, par son utilisateur B. Le serveur CSU comporte des moyens pour recevoir en provenance du terminal TB ce message 200 OK indiquant les capacités linguistiques de ce second usager, et des moyens pour extraire de ce message 200 OK, les capacités linguistiques de l'usager B.

Le serveur CSU compare les capacités linguistiques indiquées par les terminaux TA et TB respectivement, et en conclut que les usagers A et B n'ont pas de langue commune.

**Etape 205 :** Le serveur CSU envoie au terminal TA un autre message 200 OK :
200 OK
To: sip: UserB@Alcatel-Lucent.us
From: sip: UserA@Alcatel-Lucent.fr
Call-Id : abcdefg12345
...

Ce second message 200 OK... indique au terminal TA que le terminal TB est prêt pour établir une communication avec lui. Mais avant de commander l'établissement de cette communication avec le terminal TB, le serveur d'appels CSU connecte le terminal TA à un répondeur vocal, non représenté sur les figures, mais qui peut être intégré dans la même machine que le serveur d'appels CSU. Ce serveur vocal envoie alors au terminal TA un message vocal pour informer l'usager A qu'il a une incompatibilité linguistique avec l'usager B, et pour lui demander s'il souhaite l'aide d'un traducteur.

**Etape 206 :** L'usager A est invité, par le répondeur vocal, à presser une touche de son téléphone pour choisir une option :
-- Etablir une communication avec le terminal B en utilisant un traducteur,
-- ou établir une communication avec le terminal B sans traducteur,
-- ou abandonner la demande d'établissement de communication.

**Etape 207:** Dans cet exemple, l'usager A accepte la proposition de traduction.

**Etape 208 :** Le serveur d'appels CSU envoie au terminal TB le message suivant :
INVITE sip: UserB@Alcatel-Lucent.us
To: sip: UserB@Alcatel-Lucent.us
From: sip: ivr@Alcatel-Lucent.com
Call-Id: poiuy98765
...

Ce message signifie que le serveur d'appels CSU demande l'établissement d'une communication entre le terminal TB, et un répondeur vocal identifié par le champ « From sip : ivr@Alcatel-Lucent.com ». Ce répondeur, non représenté sur les figures, peut être intégré dans la même machine que le serveur CSU. Le champ « Call-id : poiuyy98765 » identifie la communication entre le serveur CSU et le terminal TB. A la réception de ce message, le terminal TB se met à sonner.

**Etape 209 :** Quand l'usager B décroche le terminal TB, ce dernier envoie au serveur CSU le message suivant :
200 OK
To: sip: UserB@Alcatel-Lucent.us
From: sip: ivr@Alcatel-Lucent.com
Accept-Language: en, es ;q=0.7
Call-Id:poiuy98765
...

Ce message indique que le terminal TB est prêt à établir une communication avec ce répondeur.

**Etape 210:** Le serveur d'appels CSU connecte le terminal TB à ce répondeur. Ce dernier envoie alors au terminal TB un message vocal pour :
-- informer l'usager B qu'il est appelé mais qu'il a une incompatibilité linguistique avec l'usager du terminal appelant, TA,
-- et pour lui demander s'il souhaite l'aide d'un traducteur.

Ce message vocal est émis dans une langue comprise par l'usager B : l'Anglais ou l'Espagnol dans cet exemple. Ce message indique à l'usager B que l'usager appelant ne parle ni l'Anglais, ni l'Espagnol, mais qu'il parle le Français et l'Allemand. L'usager B est ensuite invité à presser une touche de son téléphone pour choisir une option :
-- Etablir une communication avec le terminal TA en utilisant un traducteur,
-- ou établir une communication sans traducteur,
-- ou renoncer à établir une communication.

**Etape 211 :** L'usager B indique, dans cet exemple, qu'il souhaite établir une communication avec l'usager A en utilisant un traducteur.

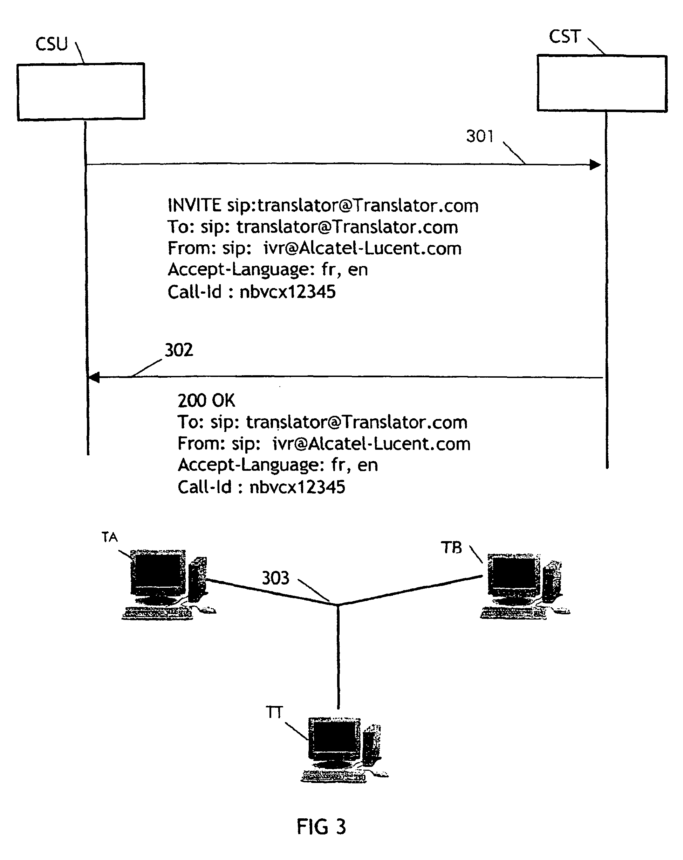

La **figure 3** représente les messages de signalisation échangés au cours d'une seconde phase de l'utilisation du premier exemple de réalisation sur la figure 1 :

**Etape 301 :** Le serveur CSU détermine une combinaison de deux langues entre lesquelles une traduction va être demandée à une agence de traduction. Dans cet exemple, il va demander une traduction Français-Anglais (dans les deux sens) qui correspond aux langues maternelles respectives des deux interlocuteurs. Le serveur CSU envoie ensuite le message suivant au serveur d'appels CST qui comporte des moyens classiques lui permettant de jouer le rôle de centre d'appel pour un groupe de traducteurs constituant une agence de traduction. Ces moyens sont aptes à rechercher dans une base de données locale (non représentée) un traducteur qui a des capacités linguistiques données, et qui est disponible à l'instant considéré.
INVITE sip: translator@Translator.com
To: sip: translator@Translator.com
From: sip: ivr@Alcatel-Lucent.com
Accept-Language: fr, en
Call-Id : nbvcx12345
... .

Le champ « To: sip: translator@Translator.com identifie une agence de traduction pour laquelle le serveur d'appels CST joue le rôle de centre d'appel. Le « champ Accept-Language: fr, en » indique les capacités linguistiques attendues d'un traducteur, c'est à dire Français-Anglais et inversement. C'est une réutilisation du champ Accept-Language qui est dédié à une autre utilisation par la norme SIP (indiquer les capacités linguistiques d'un utilisateur donné). Mais le serveur d'appels CSU sait que ce champ doit être utilisé de manière particulière lorsqu'il s'agit d'appeler une agence de traduction pour demander la traduction entre deux langues. D'autre part, le serveur d'appels CST qui est destinataire sait aussi que ce champ indique les capacités linguistiques attendues d'un traducteur, lorsqu'il s'agit d'appeler une agence de traduction. Le champ « Call-Id: nbvcx12345 » identifie la communication à établir avec un traducteur.

**Etape 302 :** Le serveur d'appels CST recherche un traducteur qui a les capacités linguistiques attendues, et qui est disponible à l'instant considéré, d'après des données de capacités linguistiques et des données de présence lues dans une base de données locale. S'il en trouve un, il répond au serveur d'appels CSU par le message SIP suivant :
200 OK
To: sip: translator@Translator.com
From: sip: ivr@Alcatel-Lucent.com
Accept-Language: fr, en
Call-Id : nbvcx12345
.... .

Le fait que le serveur d'appels CST réponde 200 OK (et non un message d'erreur) indique qu'il est prêt pour assurer la traduction Français-Anglais (dans les deux sens).

**Etape 303 :** Le serveur CSU commande alors la mise en conférence des trois terminaux TA, TB, TT.

Dans le cas où le serveur d'appels CST ne trouve pas de traducteur disponible pour la traduction Français-Anglais (dans les deux sens), dans la base de données, le serveur d'appels CST envoie au serveur CSU un message « 603 » (« Decline» dans la terminologie SIP) non représenté sur les figures.

Dans le cas où le serveur d'appels CST trouve un traducteur pour la traduction Français-Anglais (dans les deux sens), mais qu'il est indisponible pour le moment, le serveur CST envoie au serveur CSU un message « 600 » (« Busy Everywhere » dans la terminologie SIP).

Pour sélectionner un couple de langues parmi les quatre langues possibles d'après les indications données par les deux terminaux, le serveur CSU calcule une valeur pour classer chaque couple possible, en faisant le produit du coefficient q₁ de la première langue du couple avec le coefficient q₂ de la seconde langue du couple. Les valeurs croissantes définissent des priorités croissantes pour le choix.

Le tableau ci-dessous donne un exemple où le couple fr - en est le plus prioritaire :

| **Priorité** | **Langue de A** | **Langue de B** | **q1 x q2** |
|---|---|---|---|
| 1 | fr (coef = 1) | en (coef = 1) | 1 |
| 2 | de (coef = 0.8) | en (coef = 1) | 0.8 |
| 3 | fr (coef = 1) | es (coef = 0.7) | 0.7 |
| 4 | de (coef = 0.8) | es (coef = 0.7) | 0.56 |

En cas de réponse négative de l'agence de traduction, le serveur CSU cherche un autre couple de langues. Il détermine alors la combinaison Allemand-Espagnol, dans cet exemple, grâce aux indications de capacités linguistiques qui lui permettent de savoir que l'usager A comprend assez bien l'Allemand et que l'usager B comprend assez bien l'Espagnol. Il refait l'étape 301. Dans le mode de réalisation décrit ci-dessus, le serveur CSU détermine un seul couple de langues avant d'envoyer le message 301. Le serveur détermine seulement si un traducteur est disponible pour traduire ce couple de langues. Ce mode de réalisation a pour inconvénient de nécessiter éventuellement d'envoyer plusieurs message 301 respectivement pour plusieurs couples de langues, mais il a l'avantage de ne pas nécessiter une modification de la norme SIP.

Selon un autre mode de réalisation, la détermination du couple de langues à traduire ne serait pas faite dans le serveur CSU auquel sont rattachés les deux usagers mais serait faite dans le serveur CST auquel sont rattachés les terminaux téléphoniques de l'agence de traduction. Mais cette variante de réalisation nécessiterait une modification de la norme SIP pour permettre de transmettre depuis le terminal TA (respectivement TB) jusqu'au serveur CST, auquel est rattaché le terminal de l'agence, dans un même message, toutes les indications de capacités linguistiques, de l'utilisateur du terminal TA et de l'utilisateur du terminal TB, afin que ce serveur CST puisse choisir un couple de langues, sans que le serveur CSU ait à refaire au moins une seconde demande en cas de refus à la première demande. Par exemple, un message SIP transmettrait du terminal TA au serveur CST, dans un seul message, l'indication fr, de ; q=0,8 et It ; q=0,7 pour indiquer que l'utilisateur comprend le Français, l'Allemand, et l'Italien.

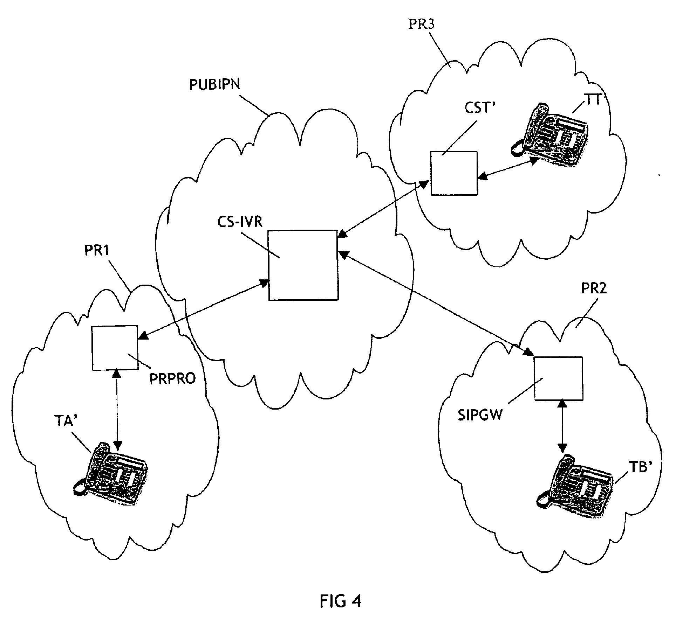

La **figure 4** représente un second exemple de réseau dans lequel est implémenté un second exemple de réalisation des deux serveurs d'appel selon l'invention. Dans cet exemple, on considère deux terminaux TA' et TB' appartenant à deux réseaux privés distincts, respectivement PR1 et PR2, reliés par un réseau public PUBIPN supportant le protocole de signalisation SIP. Cet exemple de réseau public PUBIPN comporte un serveur d'appels, référencé CS-IVR, réalisé selon l'invention.

Une agence de traduction possède un réseau privé PR3 comportant un serveur d'appels CST' qui est relié au réseau public PUBIPN. Dans cet exemple, le serveur d'appels CST' est un autocommutateur privé supportant le protocole Internet. Les traducteurs travaillant pour cette agence disposent chacun d'un poste téléphonique, supportant le protocole SIP, tel que le poste TT' représenté sur la figure à titre d'exemple. Ce serveur d'appels CST' comporte des moyens classiques lui permettant de jouer le rôle de centre d'appel.

Le réseau privé PR1 supporte le protocole SIP. Le terminal TA' est relié au réseau public PUBIPN par l'intermédiaire d'un serveur mandataire, référencé PRPRO, qui appartient au réseau privé PR1.

Le réseau privé PR2 est un réseau classique analogique, donc ne supportant pas le protocole de signalisation SIP. Le terminal TB' est relié à une passerelle SIPGW qui est reliée au réseau public par l'intermédiaire d'une liaison supportant le protocole SIP. Cette passerelle SIPGW est située dans un autocommutateur privé qui est utilisé pour interconnecter tous les terminaux du réseau privé PR2.

Dans cet exemple, le serveur d'appels, CS-IVR, remplit simultanément deux fonctions :
- Mémoriser des informations sur les abonnés au service de traduction (abonnés appelants, abonnés appelés, et traducteurs de l'agence de traduction).
- Segmenter une communication pour pouvoir établir une conférence entre l'appelant, l'appelé, et le traducteur.

Dans cet exemple, il héberge aussi un répondeur vocal. Dans d'autres exemples de réseau supportant le protocole SIP, ces trois fonctions peuvent être réparties sur des entités distinctes.

Il peut y avoir d'autres éléments sur le chemin entre les terminaux TA' et TB', notamment des serveurs mandataires, non représentés, ces éléments relayant les messages sans jouer de rôle particulier pour la fonctionnalité considérée ici.

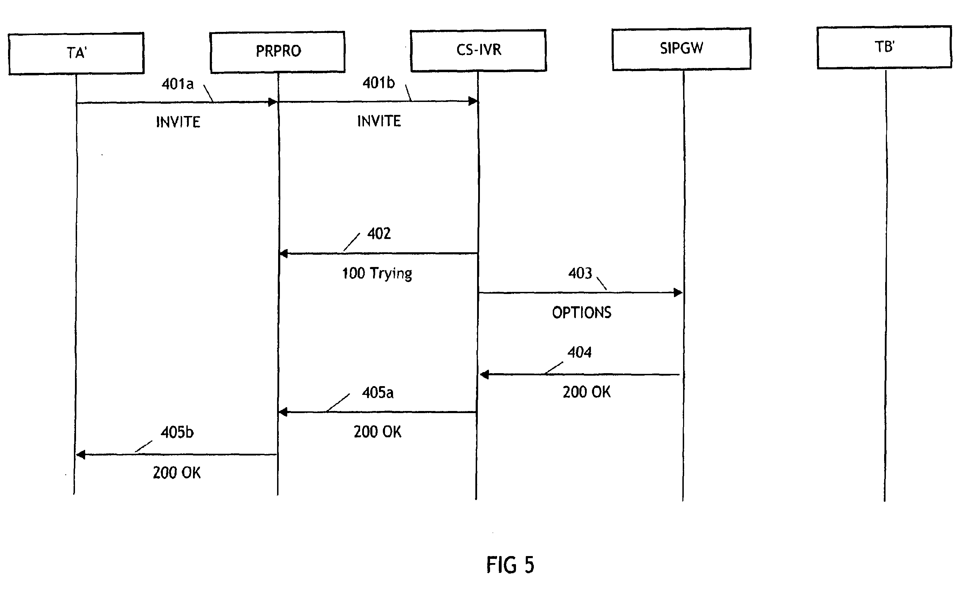

La **figure 5** représente les messages de signalisation échangés au cours d'une première phase de l'utilisation du second exemple de réalisation, CS-IVR, du serveur d'appels selon l'invention.

**Etape 401a :** Le terminal TA' d'un usager A' demande l'établissement d'une communication avec le terminal TB' d'un usager B'. Le terminal TA' envoie au serveur mandataire PRPRO, auquel il est rattaché, le message INVITE suivant :
INVITE sip: UserB@Alcatel-Lucent.us
To: sip: UserB@Alcatel-Lucent.us
From: sip: UserA@Alcatel-Lucent.fr
Accept-Language: fr, de; q=0.8
Call-Id : abcdefg12345
...

Dans ce message, le champ « To: sip : UserB @Alcatel-Lucent.fr » indique l'adresse du terminal destinataire TB', et le champ « From : sip : UserA@Alcatel-Lucent.us » indique l'adresse du terminal expéditeur TA'. Le champ «Call-Id : abcdefg 12345 » est un identificateur de communication. Le champ «Accept-Language: fr, de; q=0.8 » signifie que l'usager du terminal TA' a pour langue maternelle le Français (en sous-entendant qu'il a des capacités linguistiques maximales dans sa langue maternelle), et que cet usager comprend en outre l'Allemand avec une capacité égale 0,8 sur une échelle de capacité prédéterminée s'étalant de 0 à 1, par pas de 0,1. Ces valeurs de capacité ont été écrites une fois pour toutes dans une mémoire du terminal TA', par son utilisateur A'.

**Etape 401b :** Le serveur mandataire PRPRO retransmet ce message INVITE au serveur d'appels CS-IVR.

Etape 402 : Le serveur d'appels CS-IVR reçoit et interprète ce message. Il répond au terminal TA' par le message SIP suivant : 100 Trying.... Ce message signifie que le serveur d'appels CS-IVR essaie d'établir la communication demandée. Mais, avant de poursuivre l'établissement d'une communication, ce serveur va vérifier la compatibilité linguistique entre les usagers A' et B'.

**Etape 403 :** Le serveur d'appels CS-IVR envoie le message suivant à destination du terminal TB' :
OPTIONS sip: UserB@Alcatel-Lucent.us
To: sip: UserB@Alcatel-Lucent.us
From: sip: ivr@Alcatel-Lucent.com
Call-Id:poiuy98765
... .

Ce message OPTIONS invite le terminal TB' à indiquer ses capacités, notamment les capacités linguistiques de l'utilisateur du terminal TB'. Le champ « Call-id : poiuyy98765 » identifie la communication entre le serveur CS-IVR et le terminal TB'.

**Etape 404 :** La passerelle SIPGW reçoit ce message et l'interprète comme une requête adressée à elle-même, parce qu'elle connaît les capacités du terminal TB' et peut répondre à sa place (Le terminal TB étant un terminal qui n'est pas compatible SIP, il ne pourrait pas répondre lui-même). La passerelle SIPGW répond, en envoyant au serveur d'appels CS-IVR le message suivant :
200 O K
To: sip: User@ Alcatel-Lucent.us
From: sip: ivr@ Alcatel- Lucent.com
Accept-Language: en, es; q=0.7
Call-Id: poiuy98765
...

Ce message 200 OK indique que le terminal TB' est prêt pour établir une communication. Dans ce message, le champ «Accept-Language: en, es; q=0.7 » est une indication de capacités linguistiques qui signifie que l'usager B' a l'Anglais pour langue maternelle, mais parle aussi l'Espagnol avec une capacité égale à 0,7 sur l'échelle de capacités prédéterminées s'étalant de 0 à 1. Ces valeurs de capacité ont été écrites une fois pour toutes dans une mémoire de la passerelle SIPGW, par l'utilisateur B' du terminal TB'. Le champ « Call-id : poiuyy98765 » identifie la communication entre le serveur d'appels CS-IVR et le terminal TB'.

**Etape 405a :** Le message 200 OK est reçu par le serveur d'appels CS-IVR. Le serveur d'appels CS-IVR compare alors les capacités linguistiques des terminaux TA' et TB' respectivement, et en conclut que les usagers A' et B' n'ont pas de langue commune. Il envoie alors un nouveau message 200 OK à destination du terminal TA', ce message ayant le contenu suivant :
200 OK
To: sip:UserB@Alcatel-Lucent.us
From: sip:UserA@Alcatel-Lucent.fr
Call-id: abcdefg12345

**Etape 405b :** Le nouveau message 200 OK est reçu par le serveur mandataire PRPRO qui le retransmet au terminal TA'.

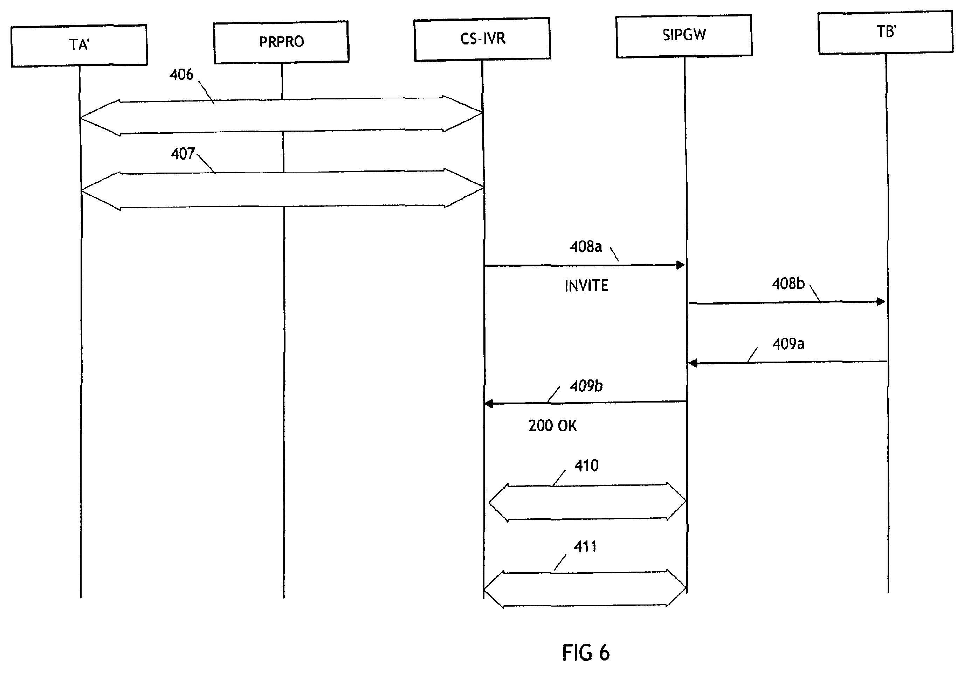

La **figure 6** représente les messages de signalisation échangés au cours d'une seconde phase de l'utilisation du second exemple de réalisation CS-IVR du serveur d'appel selon l'invention.

**Etape 406 :** Une connexion est établie entre le terminal TA' et le répondeur vocal qui est situé dans le serveur d'appels CS-IVR. L'usager A' est invité, par le répondeur vocal, à presser une touche de son téléphone pour choisir une option :
-- Etablir une communication avec le terminal TB' en utilisant un traducteur,
-- ou établir une communication avec le terminal TB' sans traducteur,
-- ou abandonner la demande d'établissement de communication.

**Etape 407 :** Dans cet exemple, l'usager A' accepte la proposition de traduction.

**Etape 408a :** Le serveur d'appels CS-IVR envoie à destination du terminal TB' le message suivant :
INVITE sip: UserB@Alcatel-Lucent.us
To: sip: UserB@Alcatel-Lucent.us
From: sip: ivr@Alcatel-Lucent.com
Call-Id:poiuy98765
...

Ce message signifie que le serveur d'appels CS-IVR demande l'établissement d'une communication entre le terminal TB', et un répondeur vocal identifié par le champ « From sip : ivr@Alcatel-Lucent.com ». Ce répondeur est, dans cet exemple, intégré dans le serveur d'appels CS-IVR. Le champ « Call-id : poiuyy98765 » identifie la communication entre le serveur d'appels CS-IVR et le terminal TB'.

**Etape 408b:** La passerelle SIPGW reçoit ce message INVITE et le convertit en un message de signalisation adapté au type d'autocommutateur privé auquel est rattaché le terminal TB'. Par exemple, pour un autocommutateur numérique à intégration de services, elle émet un message SETUP. A la réception de ce message, cet autocommutateur envoie un signal de sonnerie au terminal TB'. Le terminal TB' se met à sonner.

**Etape 409a :** Quand l'usager B' décroche le terminal TB', ce dernier envoie un message de signalisation CONNECT à la passerelle SIPGW, pour indiquer que l'usager B' répond.

**Etape 409b :** Quand la passerelle SIPGW reçoit ce message de signalisation, elle envoie le message suivant à destination du répondeur vocal, associé au serveur d'appels CS-IVR, pour indiquer que l'usager B' répond :
200 OK
To: sip: ivr@ Alcatel-Lucent.com
From: sip: UserB@ Alcatel-Lucent.us
Accept-Language: en, es ; q=0.7
Call-Id: poiuy98765

**Etape 410:** Le serveur d'appel CS-IVR reçoit ce message et le retransmet au répondeur vocal, associé au serveur d'appels CS-IVR. Le serveur d'appels CS-IVR connecte le terminal TB' à ce répondeur. Ce dernier envoie alors au terminal TB' un message vocal pour :
-- informer l'usager B' qu'il est appelé mais qu'il y a une incompatibilité linguistique avec l'usager du terminal appelant, TA',
-- et pour lui demander s'il souhaite l'aide d'un traducteur.

Ce message vocal est émis dans une langue comprise par l'usager B' : l'Anglais ou l'Espagnol dans cet exemple. Ce message indique à l'usager B' que l'usager appelant ne parle ni l'Anglais, ni l'Espagnol, mais qu'il parle le Français et l'Allemand. L'usager B' est ensuite invité à presser une touche de son téléphone pour choisir une option :
-- Etablir une communication avec le terminal TA' en utilisant un traducteur,
-- ou établir une communication sans traducteur,
-- ou renoncer à établir une communication.

**Etape 411 :** L'usager B' indique, dans cet exemple, qu'il souhaite établir une communication avec l'usager A' en utilisant un traducteur.

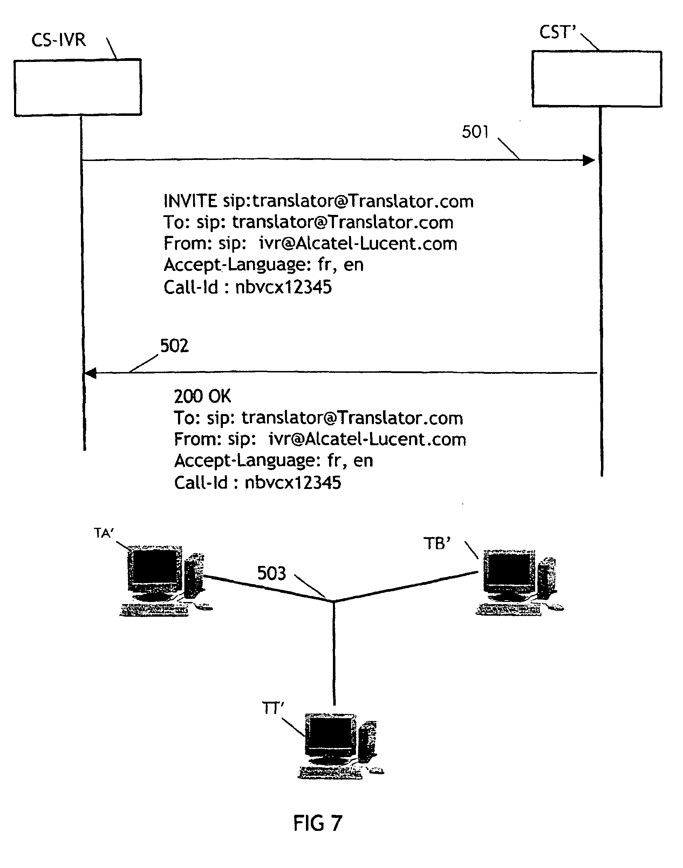

La **figure 7** représente les messages de signalisation échangés au cours d'une troisième phase de l'utilisation du serveur d'appel CS-IVR représenté sur la figure 4 :

**Etape 501 :** Le serveur d'appels CS-IVR détermine une combinaison de deux langues entre lesquelles une traduction va être demandée à une agence de traduction. Dans cet exemple, il va demander une traduction Français-Anglais (dans les deux sens) qui correspond aux langues maternelles respectives des deux interlocuteurs. Le serveur CS-IVR envoie ensuite le message suivant au serveur d'appels CST' auquel est rattaché le terminal TT' d'une agence de traduction, prédéterminée :
INVITE sip:translator@Translator.com
To: sip: translator@Translator.com
From: sip: ivr@Alcatel-Lucent.com
Accept-Language: fr, en
Call-Id : nbvcx12345
... .

Le champ « To: sip: translator@Translator.com identifie l'agence destinataire. Le « champ Accept-Language: fr, en » indique les capacités linguistiques attendues d'un traducteur, c'est à dire Français-Anglais et inversement. C'est une réutilisation du champ Accept-Language qui est dédié à une autre utilisation par la norme SIP (indiquer les capacités linguistiques d'un utilisateur donné). Mais le serveur d'appels CS-IVR sait que ce champ doit être utilisé de manière particulière lorsqu'il s'agit d'appeler une agence de traduction pour demander la traduction entre deux langues. D'autre part, le serveur d'appels CST' qui est destinataire sait aussi que ce champ indique les capacités linguistiques attendues d'un traducteur, lorsqu'il s'agit d'appeler une agence de traduction. Le champ « Call-Id: nbvcx12345 » identifie la communication à établir avec l'agence.

**Etape 502 :** Le serveur d'appels CST' comporte des moyens logiciels pour extraire de cette demande une première et une seconde indication de capacités linguistiques. Puis il recherche, dans une base de données locale, un traducteur ayant ces capacités linguistiques et qui soit disponible. S'il en trouve un, il répond au serveur d'appels CS-IVR par le message SIP suivant :
200 OK
To: sip: translator@Translator.com
From: sip: ivr@Alcatel-Lucent.com
Accept-Language: fr, en
Call-Id : nbvcx12345
.... .

Le fait que le serveur d'appels CST' réponde 200 OK (et non un message d'erreur) indique qu'il est prêt pour assurer la traduction Français-Anglais (dans les deux sens).

**Etape 503 :** Le serveur d'appels CS-IVR commande alors la mise en conférence des trois terminaux TA', TB', TT'.

Selon un mode de réalisation préféré, lorsque le serveur d'appels interrogé, CST, respectivement CST', indique au serveur d'appels demandeur, CSU, respectivement CS-IVR, qu'il n'y a pas de traducteur disponible, alors le serveur d'appels demandeur recherche, dans une liste prédéterminée, un troisième serveur d'appels jouant le rôle de centre d'appel pour un autre groupe de traducteurs, et il recommence la procédure décrite ci-dessus.

La portée de l'invention n'est pas limitée à des serveurs d'appels tels que décrits ci-dessus, elle peut être appliquée avec tous les types de serveur d'appels.

Le serveur d'appel CST ou CST' qui joue le rôle de centre d'appel pour les traducteurs peut appartenir aussi bien au réseau public, notamment si les traducteurs sont des travailleurs indépendants qui ont seulement en commun l'utilisation de ce centre d'appel.

## Revendications

1. Serveur d'appels (CSU ; CS-IVR) proposant automatiquement un service de traduction à des usagers d'un réseau téléphonique, comportant :
- des moyens (CSU ; CS-IVR) pour recevoir une première indication des capacités linguistiques d'un premier usager (TA ; TA'), et une seconde indication de capacités linguistiques d'un second usager (TB ; TB'), lorsque l'établissement d'un appel entre ces deux usagers est demandé ;
- des moyens pour détecter (205) une incompatibilité entre la première et la seconde indication de capacités linguistiques, demander alors à un second serveur d'appels (CST; CST') l'établissement d'une communication avec le terminal (TT ; TT') d'un traducteur correspondant à la première et à la seconde indication de capacités linguistiques, et qui soit disponible à l'instant considéré ;
- des moyens pour recevoir (302 ; 502) une réponse du second serveur d'appels (CST ; CST') ;
- et des moyens pour établir (303 ; 503) une conférence téléphonique réunissant les terminaux des deux usagers (TA, TB ; TA', TB') et celui d'un traducteur (TT ; TT'), via le second serveur d'appels (CST ; CST'), si le second serveur d'appels a répondu qu'il a trouvé un traducteur correspondant à la première et à la seconde indication de capacités linguistiques, et qui est disponible à l'instant considéré ;
**caractérisé en ce que** lesdits moyens (CSU ; CS-IVR) pour recevoir une première indication des capacités linguistiques d'un premier usager (TA ; TA'), et une seconde indication des capacités linguistiques d'un second usager (TB ; TB'), lorsque l'établissement d'un appel entre ces deux usagers est demandé, comportent :
- des moyens pour extraire (201), d'un premier message de signalisation SIP reçu en provenance d'un terminal du premier usager, une indication des capacités linguistiques de ce premier usager,
- des moyens pour inviter (203) le terminal du second usager à envoyer un second message de signalisation SIP comportant une indication des capacités linguistiques de ce second usager,
- des moyens pour recevoir (204), en provenance du terminal du second usager, ce second message,
- des moyens pour extraire (204) de ce second message, l'indication des capacités linguistiques de ce second usager ;
- des moyens pour envoyer alors (301) au second serveur d'appels(CST ; CST') un troisième message de signalisation SIP contenant la première et la seconde indication de capacités linguistiques, et demandant l'établissement d'une communication avec le terminal (TT ; TT') d'un traducteur correspondant à la première et à la seconde indication de capacités linguistiques.

2. Serveur d'appels (CSU ; CS-IVR) selon la revendication 1, **caractérisé en ce qu'**il comporte en outre des moyens pour rechercher, dans une liste prédéterminée, un troisième serveur d'appels desservant un autre groupe de traducteurs, et demander à ce troisième serveur d'appels l'établissement d'une communication avec le terminal d'un traducteur correspondant à la première et à la seconde indication de capacités linguistiques, et qui soit disponible à l'instant considéré, si le second serveur d'appels (CST, CST'), indique au premier serveur d'appels (CSU ; CS-IVR), qu'il n'y a pas de traducteur disponible auprès de ce second serveur d'appels.

3. Système comprenant un serveur d'appels selon la revendication 1, **caractérisé en ce qu'**il comprend également un second serveur d'appels (CST ; CST') comportant des moyens pour jouer le rôle d'un centre d'appel pour une pluralité de terminaux (TT ; TT') mis à la disposition d'une pluralité de traducteurs, **caractérisé en ce qu'**il comporte :
- des moyens pour recevoir (301 ; 501), en provenance d'un autre serveur d'appels (CSU ; CS-IVR), un message de signalisation SIP contenant une demande d'établissement d'une communication,
- des moyens pour extraire (502) de ce message SIP une première et une seconde indication de capacités linguistiques,
- des moyens pour rechercher (502) dans une base de données un traducteur correspondant à la première et à la seconde indication de capacités linguistiques, et qui soit disponible à l'instant considéré ; puis envoyer une réponse à l'autre serveur d'appels (CSU ; CS-IVR).

## Claims

1. A call server (CSU; CS-IVR) automatically offering a translation service to users of a telephone network, comprising:
- means (CSU; CS-IVR) for receiving a first indication of the first user's (TA; TA') linguistic capabilities, and a second indication of a second user's (TB; TB') linguistic capabilities, whenever the establishment of a call between these two users is requested;
- means for detecting (205) an incompatibility between the first and second indications of linguistic capabilities, then requesting that a second call server (CST; CST') establish a communication with the terminal (TT; TT') of a translator corresponding to the first and second indication of linguistic capabilities, and who is available at the given time;
- means for receiving (302; 502) a reply from the second call server (CST; CST');
- and means for establishing (303; 503) a telephone conference bringing together the terminals of two users (TA, TB; TA', TB') and that of a translator (TT; TT'), via the second call server (CST; CST'), if the second call server has replied that it has found a translator corresponding to the first and second indication of linguistic capabilities, and who is available at the given time;
**characterized in that** said means (CSU; CS-IVR) for receiving a first indication of a first user's (TA; TA') linguistic capabilities, and a second indication of a second user's (TB; TB') linguistic capabilities, whenever the establishment of a call between these two users is requested, comprise:
- means for extracting (201), from a first SIP signaling message received from a terminal of the first user, an indication of that first user's linguistic capabilities,
- means for inviting (203) the second user's terminal to send a second SIP signaling message comprising an indication of that second user's linguistic capabilities,
- means for receiving (204) from the second user's terminal, that second message,
- means for extracting (204) from that second message, the indication of that second user's linguistic capabilities;
- means for then sending (301) to the second call server (CST; CST') a third SIP signaling message containing the first and second indication of linguistic capabilities, and requesting the establishment of a communication with the terminal (TT; TT') of a translator corresponding to the first and second indication of linguistic capabilities.

2. A call server (CSU; CS-IVR) according to claim 1, **characterized in that** it further comprises means for searching, within a predetermined list, for a third call server serving another group of translators, and requesting from that third call server the establishment of a communication with the terminal of a translator corresponding to the first and second indication of linguistic capabilities, and who is available at the given time, if the second call server (CST, CST'), indicates to the first call server (CSU; CS-IVR) that there is no translator available from that second call server.

3. A system comprising a call server according to claim 1, **characterized in that** it further comprises a second call server (CST; CST') comprising means for playing the role of a call center for a plurality of terminals (TT; TT') made available to a plurality of translators, **characterized in that** it comprises:
- means for receiving (301; 501) from another call server (CSU; CS-IVR) a SIP signaling message containing a request to establish a communication,
- means for extracting (502) from that SIP message a first and second indication of linguistic capabilities,
- means for searching (502) within a database for a translator corresponding to the first and second indication of linguistic capabilities, and who is available at the given time; then sending a reply to the other call server (CSU; CS-IVR).

## Patentansprüche

1. Anruf-Server (CSU; CS-IVR) mit automatischem Angebot eines Übersetzungsdienstes für Benutzer eines Telefonnetzwerks, umfassend:
- Mittel (CSU; CS-IVR) zum Empfangen einer ersten Angabe der Sprachkenntnisse eines ersten Benutzers (TA; TA'), und einer zweiten Angabe der Sprachkenntnisse eines zweiten Benutzers (TB; TB'), wenn der Aufbau einer Rufverbindung zwischen diesen beiden Benutzern angefordert wird;
- Mittel zum Erkennen (205) einer Inkompatibilität zwischen der ersten und der zweiten Angabe der Sprachkenntnisse, und zum anschließenden Anfordern, bei einem zweiten Anruf-Server (CST; CST'), des Aufbaus einer Verbindung zu dem Endgerät (TT ; TT') eines Übersetzers, welcher der ersten und der zweiten Angabe der Sprachkenntnisse entspricht und zu dem gegebenen Zeitpunkt verfügbar ist;
- Mittel zum Empfangen (302; 502) einer Antwort des zweiten Anruf-Servers (CST; CST');
- und Mittel zum Aufbauen (303; 503) einer Telefonkonferenz, welche die Endgeräte der beiden Benutzer (TA, TB; TA', TB') über den zweiten Anruf-Server (CST; CST') mit dem Endgerät eines Übersetzers (TT; TT') verbindet, wenn der zweite Anruf-Server geantwortet hat, dass er einen der ersten und der zweiten Angabe der Sprachkenntnisse entsprechenden Übersetzer gefunden hat, welcher zu dem gegebenen Zeitpunkt verfügbar ist;
**dadurch gekennzeichnet, dass** die besagten Mittel (CSU; CS-IVR) zum Empfangen einer ersten Angabe der Sprachkenntnisse eines ersten Benutzers (TA; TA) und einer zweiten Angabe der Sprachkenntnisse eines zweiten Benutzers (TB; TB'), wenn der Aufbau einer Verbindung zwischen diesen beiden Benutzern angefordert wird, umfassen:
- Mittel zum Extrahieren (201), aus einer ersten von dem Endgerät des ersten Benutzers empfangenen SIP-Signalisierungsnachricht, einer Angabe der Sprachkenntnisse dieses ersten Benutzers;
- Mittel zum Auffordern (203) des Endgeräts des zweiten Benutzers, eine zweite SIP-Signalisierungsnachricht mit einer Angabe der Sprachkenntnisse dieses zweiten Benutzers zu senden;
- Mittel zum Empfangen (204) dieser zweiten Nachricht von dem Endgerät des zweiten Benutzers;
- Mittel (204) zum Extrahieren der Angabe der Sprachkenntnisse dieses zweiten Benutzers aus dieser zweiten Nachricht;
- Mittel zum anschließenden Senden (301), an den zweiten Anruf-Server (CST; CST'), einer dritten SIP-Signalisierungsnachricht, welche die erste und die zweite Angabe der Sprachkenntnisse enthält und den Aufbau einer Verbindung zu dem Endgerät (TT; TT') eines der ersten und der zweiten Angabe der Sprachkenntnisse entsprechenden Übersetzers anfordert.

2. Anruf-Server (CSU; CS-IVR) nach Anspruch 1, **dadurch gekennzeichnet, dass** er weiterhin Mittel umfasst, um in einer vorgegebenen Liste einen dritten Anruf-Server zu suchen, welcher eine andere Gruppe von Übersetzern bedient, und bei diesem dritten Anruf-Server den Aufbau einer Verbindung mit dem Endgerät eines der ersten und der zweiten Angabe der Sprachkenntnisse entsprechenden Übersetzers, welcher zu dem gegebenen Zeitpunkt verfügbar ist, anzufordern, wenn der zweite Anruf-Server (CST, CST') dem ersten Anruf-Server (CSU ; CS-IVR) meldet, dass bei diesem zweiten Anruf-Server kein Übersetzer verfügbar ist.

3. System, umfassend einen Anruf-Server gemäß Anspruch 1, **dadurch gekennzeichnet, dass** es ebenfalls einen zweiten Anruf-Server (CST; CST') umfasst, der Mittel aufweist, welche die Rolle eines Call-Centers für eine Mehrzahl von einer Mehrzahl von Übersetzern zur Verfügung gestellten Endgeräten (TT; TT') übernehmen, **dadurch gekennzeichnet, dass** es umfasst:
- Mittel zum Empfangen (301; 501) einer SIP-Signalisierungsnachricht, welche eine Anforderung für den Aufbau einer Verbindung enthält, von einem anderen Anruf-Server (CSU; CS-IVR);
- Mittel zum Extrahieren (502) einer ersten und einer zweiten Angabe der Sprachkenntnisse aus dieser SIP-Nachricht;
- Mittel zum Suchen (502), in einer Datenbank, eines Übersetzers, welcher der ersten und der zweiten Angabe der Sprachkenntnisse entspricht und zu dem gegebenen Zeitpunkt verfügbar ist, und zum anschließenden Senden einer Antwort an den anderen Anruf-Server (CSU; CS-IVR).
